# EUROPÄISCHE PATENTANMELDUNG

(11) **EP 4 304 064 A1**
(43) Veröffentlichungstag der Anmeldung: **10.01.2024**
(21) Anmeldenummer: 22183330.4
(22) Anmeldetag: 06.07.2022
(51) Int. Cl.: H02K 15/12

(54) **BESTIMMEN EINES AUSHÄRTUNGSVERLAUFS EINER ELEKTRISCHEN ISOLATIONSSCHICHT**

(71) Anmelder: Siemens Aktiengesellschaft, 80333 München (DE)
(72) Erfinder: Huber, Jürgen, 91058 Erlangen (DE); Katzenberger, Tobias, 97631 Bad Königshofen STT Untereßfeld (DE); Plochmann, Bastian, 91413 Neustadt an der Aisch (DE); Schirm, Dieter, 96149 Breitengüßbach (DE); Übler, Matthias, 92289 Ursensollen (DE)
(74) Vertreter: Siemens Patent Attorneys

(57) **Zusammenfassung**

Die Erfindung betrifft ein Verfahren zum Ermitteln eines Aushärtungsverlaufs (C1,C2) beim Aufbringen einer elektrischen Isolationsschicht aus einem Isolationsmaterial (40) im flüssigen Zustand auf ein elektrisches Produkt, insbesondere auf ein elektrisches Wicklungssystem (25). Um das Aushärten des Isolationsmaterials zu verbessern werden die Schritte vorgeschlagen:
- Bereitstellen eines Temperaturverlaufs (TC), den das elektrische Produkt beim Aufbringen und Aushärten der Isolationsschicht durchläuft,
- Bereitstellen eines Reaktionsmodells des Isolationsmaterials, das den Aushärtungsverlauf des Isolationsmaterials auf Basis eines Temperaturverlaufs als Eingangsgröße ausgibt und auf Basis von gemessenen Reaktionsenthalpien (h1,...,h6) des Isolationsmaterials (40) bei zumindest zwei, vorzugsweise zumindest vier, verschiedene Heizraten modelliert ist und
- Ermitteln des Aushärtungsverlaufs (C1,C2) durch das Reaktionsmodel mit dem Temperaturverlauf (TC). Weiterhin betrifft die Erfindung ein Verfahren zum Aufbringen des Isolationsmaterials (40) auf ein elektrisches Produkt, vorzugweise auf ein elektrisches Wicklungssystem (25).

## Beschreibung

Die Erfindung betrifft ein Verfahren zum Ermitteln eines Aushärtungsverlaufs, Aufbringen einer elektrischen Isolationsschicht aus einem Isolationsmaterial im flüssigen Zustand sowie ein Verfahren zum Aufbringen des Isolationsmaterials auf ein elektrisches Produkt, vorzugweise auf ein elektrisches Wicklungssystem.

Ein derartiges Verfahren kommt beispielsweise beim Imprägnieren von Rotoren und Statoren von Elektromotoren zum Einsatz. Insbesondere der Imprägniervorgang, welcher oftmals in Form einer Tauchimprägnierung sowie einer anschließenden Heißluftofen-Härtung realisiert wird ist ein großer Kostenfaktor in der Fertigung hinsichtlich der Investmentkosten, Wartung, Taktzeiten, Fertigungsplatzbedarf, usw. Hier sind die Optimierungspotentiale zum einen im Materialverbrauch, der Härtungstemperatur / -zeit (Energiekosten, CO2) sowie in der Automatisierung zu finden.

Der Erfindung liegt die Aufgabe zugrunde, das Aushärten des Isolationsmaterials zu verbessern.

Diese Aufgabe wird durch ein Verfahren mit den im Anspruch 1 angegebenen Merkmalen gelöst. Das Verfahren zum Ermitteln eines Aushärtungsverlaufs beim Aufbringen einer elektrischen Isolationsschicht aus einem Isolationsmaterial im flüssigen Zustand auf ein elektrisches Produkt, insbesondere auf ein elektrisches Wicklungssystem, umfasst die Schritte:
- Bereitstellen eines Temperaturverlaufs, den das elektrische Produkt beim Aufbringen und Aushärten der Isolationsschicht durchläuft,
- Bereitstellen eines Reaktionsmodells des Isolationsmaterials, das den Aushärtungsverlauf des Isolationsmaterials auf Basis eines Temperaturverlaufs als Eingangsgröße ausgibt und auf Basis von gemessenen Reaktionsenthalpien des Isolationsmaterials für zumindest zwei, vorzugweise zumindest vier verschiedene Heizraten modelliert ist und
- Ermitteln des Aushärtungsverlaufs durch das Reaktionsmodel mit dem Temperaturverlauf.

Das elektrische Wicklungssystem kann dabei neben Wicklungen in Elektromotoren, also Statoren oder Rotoren, auch Spulen für weitere Anwendungen z.B. Magnetfeldspulen in der Magnetresonanztomographie oder HF Spulen betreffen.

Der Aushärtungsverlauf kann ein auf 1 normierter Verlauf bezüglich einer vollständigen Enthalpie der Aushärtung des jeweiligen Isolationsmaterials sein und wird über die Zeit angetragen. Die Heizraten sind Temperatursteigungen, die bei den Messungen verwendet werden. Als Spezialfall können hier auch Heizraten von 0 K/Min, also Isothermen verwendet werden.

Das Reaktionsmodell interpoliert die Enthalpien bzw. die Reaktionsraten für Temperatursteigungen, die von den Heizraten verschieden sind, die bei den Messungen verwendet wurden. So kann das Reaktionsmodell für alle im Rahmen des Aufbringens und Aushärtens auftretenden Temperatursteigungen einen Fortschritt der Aushärtung ausgeben. Es kann also für jeden Zeitschritt eine Steigung der Temperatur ermittelt werden, wodurch das Reaktionsmodells einen Fortschritt im Aushärtungsverlauf ausgeben kann.

In einer weiteren Ausführungsform werden die gemessenen Reaktionsenthalpien mittels dynamischer Differenzkalorimetrie des Isolationsmaterials gemessen. Es müssen so vorteilhaft nur wenige Proben des Isolationsmaterial vermessen werden, um das Modell zu Parametrieren. Die so gemessenen DSC Signale können integriert werden, um die Reaktionsenthalpie bei der jeweiligen Heizrate zu bestimmen. Auf Basis einer vollständigen Reaktionsenthalpie, die bei einer vollständigen Vernetzung des Isolationsmaterials auftritt, kann dann ein Reaktionsverlauf für das Isolationsmaterial angegeben werden. In anderen Worten ist die vollständige Vernetzung der höchstmögliche Vernetzungsgrad aufgrund der potenziell vorhandenen freien Reaktionspartner unter Einbeziehung von sterischer Hinderung (also freibleibende Monomere, aufgrund zu geringer Diffusionsmöglichkeit und zu großen Abständen zu potenziellen Reaktionspartnern) .

In einer weiteren Ausführungsform liegen die Heizraten im Bereich von 0,1 K/min bis 10 K/min. Insbesondere hat sich herausgestellt, dass Heizraten im Bereich von 0,25 K/min bis 8 K/min vorteilhaft sind, da so eine Abdeckung der bei der Aushärtung üblicherweise auftretenden Temperatursteigungen gewährleistet ist.

In einer weiteren Ausführungsform ist das Reaktionsmodel auf Basis von gemessenen Reaktionsenthalpien bei zumindest vier verschiedenen Heizraten modelliert. Um die Interpolation für Reaktionsenthalpien für Temperatursteigungen zu verbessern, die von den vermessenen Heizraten verschieden sind, hat es sich als vorteilhaft erwiesen Messungen (z.B. DSC Messungen) des Isolationsmaterials bei zumindest vier verschiedenen Heizraten durchzuführen.

In einer weiteren Ausführungsform werden zum Modellieren des Reaktionsmodells Reaktionsratenverläufe der Aushärtung auf Basis von Reaktionsenthalpien des Isolationsmaterials bestimmt. Die Reaktionsratenverläufe können dabei beispielsweise durch Normierung des DSC Signals auf eine vollständige Enthalpie der Aushärtungsreaktion ermittelt werden. Weiterhin werden durch Integration der Reaktionsratenverläufe die Aushärtungsverläufe bestimmt.

In einer weiteren Ausführungsform ist das Reaktionsmodell auf Basis der Arrhenius-Gleichung modelliert. Besonders vorteilhaft ist es, wenn für die Aktivierungsenergie E_{A} in der Arrhenius-Gleichung ein über den Härtungsverlauf hinweg variabler Wert und keine Konstante verwendet wird.

In einer weiteren Ausführungsform ist der Temperaturverlauf ein gemessener Temperaturverlauf eines elektrischen Produkts, insbesondere ein mit einem Thermoelement in einem elektrischen Wicklungssystem gemessener Temperaturverlauf. So kann ein Temperaturverlauf einfach und effizient bereitgestellt werden. Oftmals kann das Thermoelement nach dem Aufbringen des Isolationsmaterials im Wicklungssystem verbleiben. Der Aushärtungsverlauf könnte dabei sogar in Echtzeit mitgerechnet werden. Oftmals ist es ausreichend, wenn der Aushärtungsverlauf einmalig für das jeweilige Isolationsmaterial und das elektrische Produkt bestimmt wird, wenn viele gleichartige Produkte gefertigt werden.

In einer weiteren Ausführungsform ist der Temperaturverlauf ein Soll-Temperaturverlauf eines elektrischen Produkts. Der Soll-Temperaturverlauf kann dabei ein Temperaturverlauf sein, der vorgegeben ist und in der Anlage eingehalten wird. So kann überprüft werden, ob der Temperaturverlauf zuverlässig zu einer ausreichenden Aushärtung des Isolationsmaterials führt.

In einer weiteren Ausführungsform umfasst das Ermitteln des Aushärtungsverlaufs durch das Reaktionsmodell ein Ermitteln eines Gelpunkts. Der Gelpunkt kann dabei auf den Aushärtungsverlauf aufgetragen werden und beispielsweise durch rheologische Messungen ermittelt werden. Der Gelpunkt oder auch Gelierpunkt ist dabei durch eine definierte Viskositätserhöhung gekennzeichnet und kann an der Kreuzung von Speicher- und Verlustmodul bei den rheologischen Messungen ermittelt werden. Der Vorteil der Berücksichtigung des Gelpunktes ist, dass das Isolationsmaterial so bereits besser am elektrischen Produkt haftet und nicht mehr abfließt. Entsprechend darauffolgende Schritte (z.B. das Herausnehmen aus dem Bad) können so genauer getaktet werden. Es ist auch möglich, dass ein vom Gelpunkt verschiedener Viskositätsschwellwert definiert wird, der überschritten werden muss, wenn der nächste Prozessschritt durchgeführt werden soll.

In einer weiteren Ausführungsform ist das Isolationsmaterial ein Harz, vorzugsweise ein flüssiges Reaktivharz, insbesondere Epoxidharz, ungesättigte Polyester oder Polyesterimid. Auch Aushärtungsverläufe von Mehrkomponentenharzen (z.B. aminisch härtende Epoxidharze, Polyurethane mit Isocyanat), die unmittelbar vor dem Aufbringen auf das elektrische Produkt gemischt werden, können mit dem Reaktionsmodell bestimmt werden.

Die Aufgabe wird weiterhin gelöst durch ein Verfahren zum Aufbringen einer elektrischen Isolationsschicht aus einem Isolationsmaterial im flüssigen Zustand auf ein elektrisches Produkt, insbesondere auf ein elektrisches Wicklungssystem, umfassend die Schritte:
- Bereitstellen des elektrischen Produkts,
- Bereitstellen des Isolationsmaterials im flüssigen Zustand,
- Aufbringen des Isolationsmaterials auf das Produkt,
- Aushärten des Isolationsmaterials,
- Bereitstellen eines Temperaturverlaufs, den das elektrische Produkt beim Aufbringen und Aushärten der Isolationsschicht durchläuft und
- Beenden des Aushärtens wenn ein mit einem Verfahren nach einem der vorhergehenden Ansprüche ermittelter Aushärtungsverlauf einen Schwellwert überschreitet.

Ein Messen des Temperaturverlaufs durch ein in oder auf dem elektrischen Produkt positionierten Thermoelement kann durchgeführt werden, ist aber in der Regel nicht für jedes Produkt notwendig.

Das Aushärten kann dabei unter Zuführung von externer Heizenergie durchgeführt werden.

Der Schwellwert des Aushärtungsverlaufes, also ein Aushärtungsgrad ab dem das Aushärten beendet werden kann, kann dabei beispielsweise 80% betragen. Das Beenden des Aushärtens ist dabei das Beenden des aktiven Aushärtens unter Zuführung von externer Heizenergie. Das Isolationsmaterial kann dann z.B. unter Einfluss der verbleibenden Restwärme im Produkt noch vollständig nachhärten, ein Verbleib in der Anlage ist dazu nicht nötig.

In einer weiteren Ausführungsform ist das Aufbringen ein Eintauchen des elektronischen Produkts in ein Bad des Isolationsmaterials im flüssigen Zustand. Im Bad kann das elektrische Produkt selbst, z. B. durch bestromen des Wicklungssystems, geheizt werden.

In einer weiteren Ausführungsform ist das Aufbringen ein Beträufeln des elektronischen Produkts mit dem Isolationsmaterial im flüssigen Zustand. Hier kann es sinnvoll sein, den Temperaturverlauf erst ab einer gewissen Menge des Isolationsmaterials, das durch Beträufeln aufgebracht wurde, zu betrachten.

Im Folgenden wird die Erfindung anhand der in den Figuren dargestellten Ausführungsbeispiele näher beschrieben und erläutert. Es zeigen:
- FIG 1: schematisch ein Verfahren zum Aufbringen eines Isolationsmaterials auf ein elektrisches Wicklungssystem,
- FIG 2: beispielhaft einen Temperaturverlauf beim Aufbringen und Aushärten,
- FIG 3: DSC Messungen eines Isolationsmaterials bei unterschiedlichen Heizraten,
- FIG 4: aus den DSC Messungen ermittelte Reaktionsraten des in FIG 3 vermessenen Isolationsmaterials,
- FIG 5: aus den Reaktionsraten integrierte Reaktionsfortschritte,
- FIG 6: eine schematische Darstellung des Reaktionsmodells für das Isolationsmaterial und
- FIG 7: ein mittels je eines Reaktionsmodells für zwei voneinander verschiedene Isolationsmaterialen ermittelter Aushärtungsverlauf.

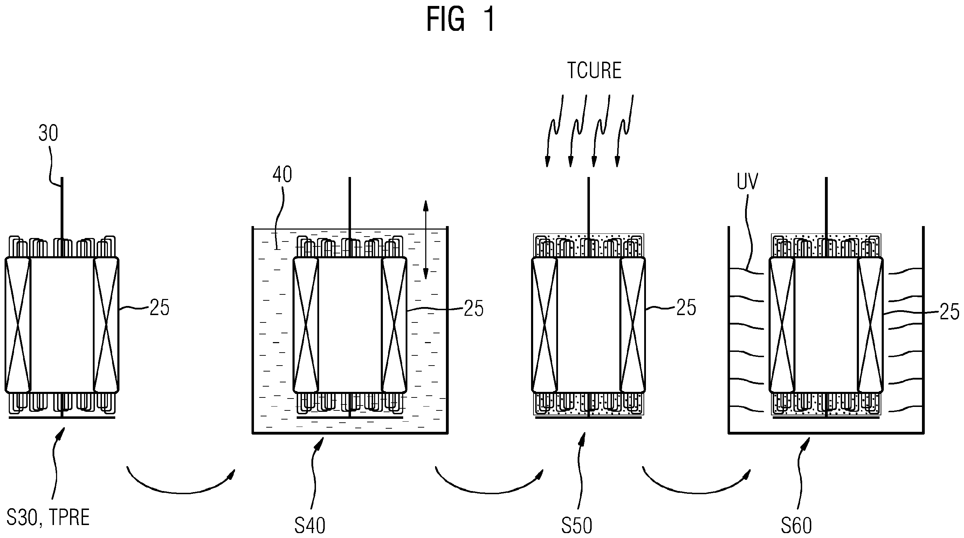

FIG 1 zeigt schematisch ein Verfahren zum Aufbringen eines Isolationsmaterials 40 im flüssigen Zustand auf ein elektrisches Wicklungssystem 25, die hier als Stator-Wicklungen eines Elektromotors ausgebildet sind. Der Stator bzw. das Wicklungssystem 25 ist dabei auf einem Träger 30 zum Transport durch eine Fertigungsanlage angeordnet.

Ein Schritt S30 zeigt schematisch ein Vorheizen des Wicklungssystems 25 außerhalb des Isolationsmaterial mit einem Temperaturverlauf TPRE bzw. auf eine Temperatur TPRE.

Ein Schritt S40 zeigt ein Eintauchen des Wicklungssystems in ein Tauchbad, das mit flüssigem Isolationsmaterial 40 gefüllt ist. Bei Eintauchen kann das elektrische Wicklungssystem 25 weiter bestromt und geheizt werden.

Ein Schritt S50 zeigt ein Aushärten des Isolationsmaterials 40 unter Einwirkung eines Temperaturverlaufs TCURE. Dieser kann durch einen Ofen ergänzend oder alternativ zum bestromen des Wicklungssystems 25 bereitgestellt werden.

In einem Schritt S60 wird nun ein UV-Härten durch UV-Strahlung UV durchgeführt. Dies hat den Vorteil, dass das Isolationsmaterial so auch an der Oberfläche gut aushärtet und nicht mehr klebrig ist. Das UV-Aushärten ist dabei optional.

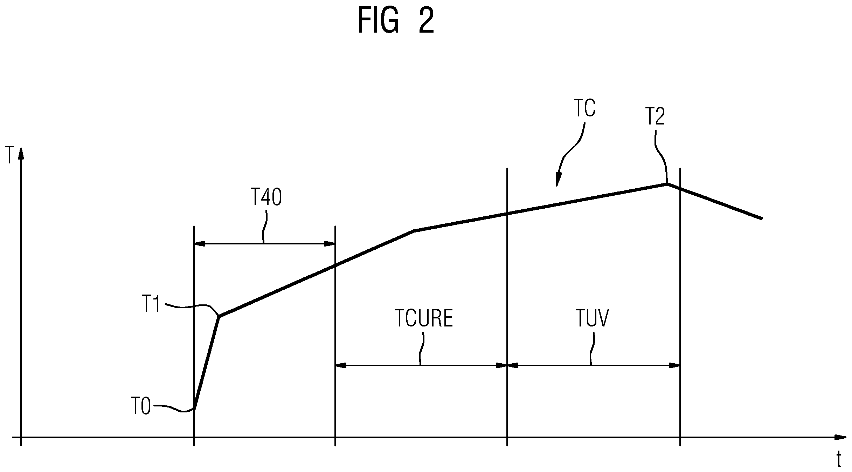

FIG 2 zeigt beispielhaft einen Temperaturverlauf TC beim Aufbringen und Aushärten eines Isolationsmaterials, beispielsweise wie in FIG 1 gezeigt, den das Isolationsmaterial näherungsweise am elektrischen Produkt, z.B. am Wicklungssystem 25, erfährt.

Eine erste Temperatur T0 ergibt sich aus der Temperatur des Produkts beim Aufbringen des flüssigen Isolationsmaterials und der Temperatur des Isolationsmaterials beim Aufbringen. Beim Eintauchen in das flüssige Isolationsmaterial 40 stellt sich also z. B. die Temperatur T0 ein. Das Aufheizen bis zur zweiten Temperatur T1 kann einerseits durch eine thermische Trägheit des elektrischen Wicklungssystems bedingt sein, andererseits durch zusätzliches Aufheizen des Wicklungssystems eintreten. Der Temperaturverlauf T40 beschreibt den Verlauf, den das Harz direkt am Produkt noch beim Aufbringen erfährt. Ein weiterer Bereich zeigt den Temperaturverlauf TCURE beim Aushärten, bspw. im Ofen. Ein finaler Bereich TUV zeigt einen Temperaturverlauf während einer UV-Bestrahlung, die vor allem für eine hohe Oberflächenaushärtung sorgt, während das Produkt noch bis zur Endtemperatur T2 beheizt wird. Danach tritt ein Abkühlen ein und das Isolationsmaterial härtet noch nach.

Es ist nun mit der Erfindung möglich einen Aushärtungsverlauf für ein solches Temperaturprofil TC zu ermitteln, auch wenn es unterschiedliche Steigungen aufweist, die nicht den Heizraten entsprechen.

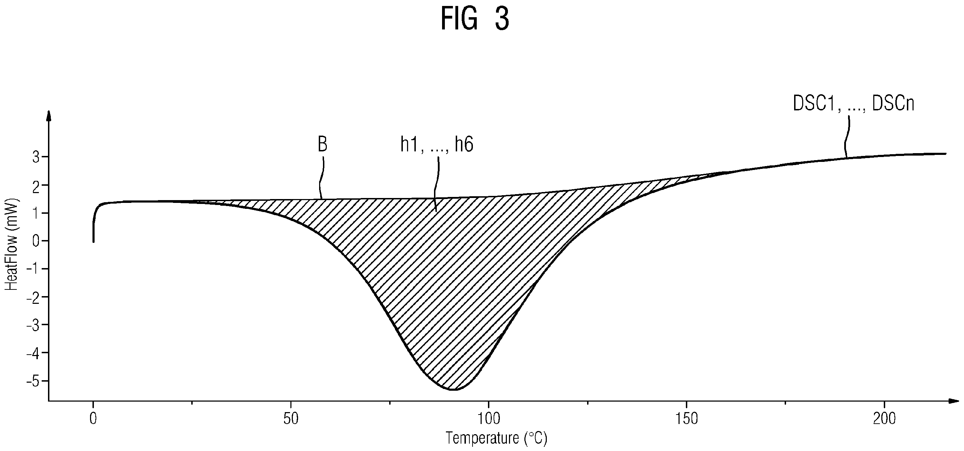

FIG 3 zeigt DSC-Messungen (dynamische Differenzkalorimetrie) eines Isolationsmaterials jeweils bei unterschiedlichen Heizraten, in diesem Fall bei 0,25 K/min, 0,5 K/min, 1 K/min, 2 K/min, 4 K/min und 8 K/min. Hier wird ein Wärmefluss in mW über die Temperatur aufgetragen. Die DSC Messung vergleicht dabei pro genormter Probenmasse in einem mit dem verwendeten Isolationsmaterial gefüllten Probengefäß, im Vergleich zu einem gleichartigen leeren Probengefäß, d.h. es wird eine Differenz des Wärmeflusses dargestellt.

Eine Integration unterhalb einer Basislinie B liefert eine spezifische Enthalpie für die jeweiligen Reaktionen. Derartige Analysen können mit handelsüblichen Programmen für DSC Messgeräte durchgeführt werden.

Die fortschreitende Enthalpie ist dabei ein Maß für den Fortschritt der Reaktion, jeweils bezogen auf eine der Heizraten.

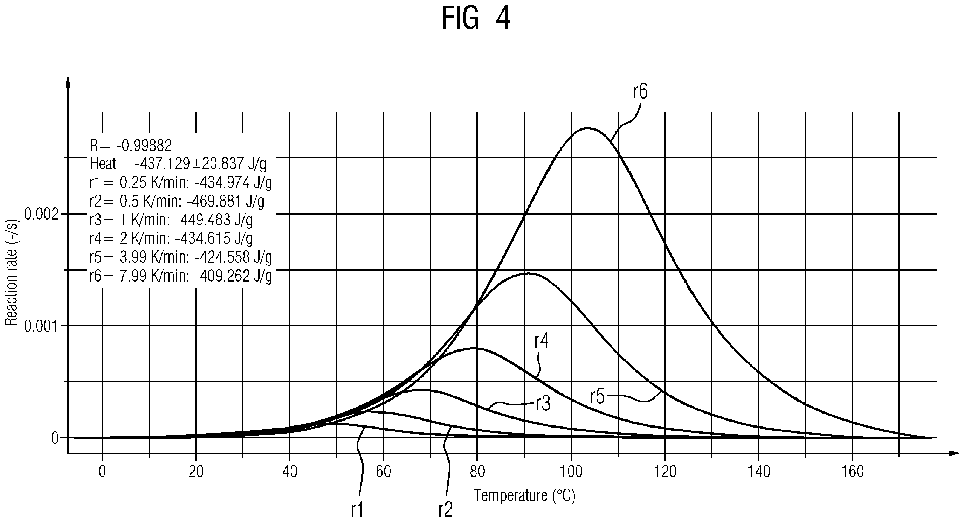

FIG 4 zeigt nach Korrektur von Offset und in entgegengesetzte Richtung angetragen aus den DSC Messungen ermittelte Reaktionsraten r1,...,r6 in 1/s des in FIG 3 vermessenen Isolationsmaterials, wieder über die Temperatur angetragen. Die Reaktionsraten r1,...,6 ergeben sich aus der Enthalpie für die vollständige Reaktion (auch vollständige Enthalpie) und der aktuell ermittelten Enthalpie für den jeweiligen Zeitpunkt bzw. hier Temperaturpunkt. Die vollständige Enthalpie kann beispielsweise in FIG 3 so festgelegt sein, dass hier bzgl. der Basislinie B keine Änderung mehr stattfindet.

Reaktionsrate r1 wurde dabei bei einer Heizrate von 0,25 K/min ermittelt, Reaktionsrate r2 bei 0,5 K/min, Reaktionsrate r3 bei 1 K/min, Reaktionsrate r4 bei 2 K/min, Reaktionsrate r5 bei 4 K/min und Reaktionsrate r6 bei 8 K/min. Die Heizraten sind dabei nur beispielhaft und können entsprechend dem verwendeten Isolationsmaterial gewählt werden.

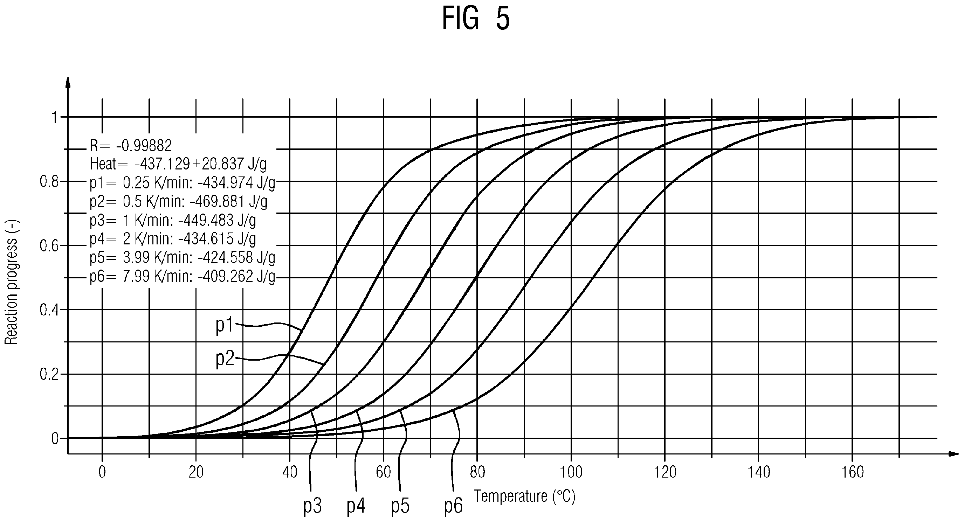

FIG 5 zeigt aus den Reaktionsraten integrierte Reaktionsfortschritte, die durch Integration der Kurven aus FIG 4 ermittelt werden können. So entsteht ein absolut auf 1 normierter Reaktionsfortschritt über die Temperatur. Der Reaktionsfortschritt ist in diesem Fall der Aushärtungsgrad. Die Reaktionsfortschritte sind dabei analog zu FIG 4 wie folgt zugewiesen: Reaktionsfortschritt p1 wurde dabei bei einer Heizrate von 0,25 K/min ermittelt, Reaktionsfortschritt p2 bei 0,5 K/min, Reaktionsfortschritt p3 bei 1 K/min, Reaktionsfortschritt p4 bei 2 K/min, Reaktionsfortschritt p5 bei 4 K/min und Reaktionsfortschritt p6 bei 8 K/min.

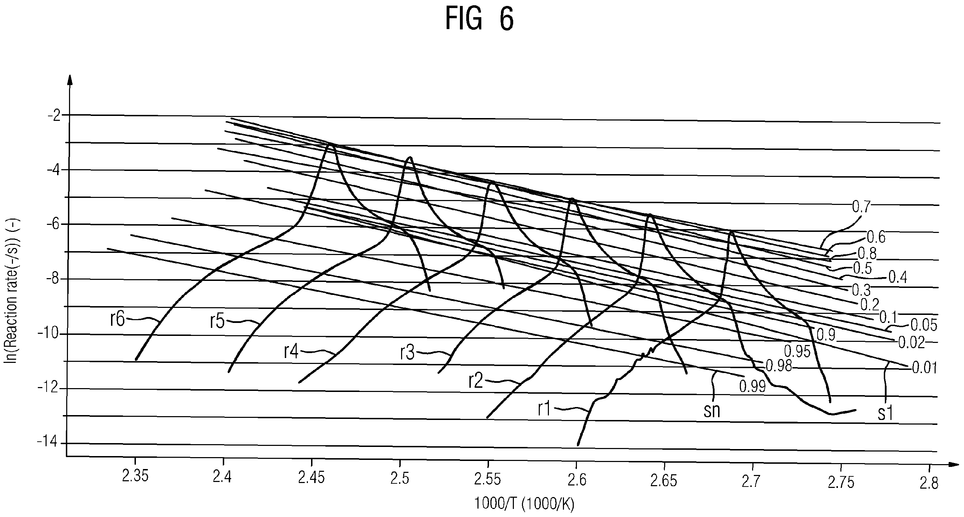

FIG 6 zeigt nun wie die in FIG 4 und 5 gezeigten Daten durch eine Isokonversionsanalyse (auch Isoconversional Kinetic Analysis) in ein Modell überführt werden und der Reaktionsfortschritt bzw. der Aushärtungsverlauf auch für Temperaturänderungen, die nicht mit den Heizraten übereinstimmen, ermittelt werden.

Dargestellt sind in einer Skala von 1000/Temperatur in 1000/K über ln der Reaktionsrate (1/s) zunächst die Reaktionsraten r1,...,r6, wie sie in Fig 4 gezeigt sind. Das eigentliche Reaktionsmodell ist aber durch die Geraden s1,...,sn dargestellt, wobei zur Modellierung hier vorzugsweise ein Ansatz auf Basis der Arrhenius-Gleichung mit variabler Aktivierungsenergie zur Anwendung kommt. Als Modellannahme wird hier angenommen, dass die Aushärtungsreaktion nur durch das Temperaturprofil beeinflusst wird. Eine UV-Härtung der Oberfläche ist nicht mit modelliert - verbessert aber die Oberflächengüte der Isolationsschicht.

Die Isokonversionsanalyse kann beispielsweise nach Friedman oder Ozawa-Flynn-Wall durchgeführt werden. Dabei werden die Aktivierungsenergiewerte durch differenzielle oder integrierende Methoden angeglichen. Die differenziellen isokonversionellen Methoden basieren auf der Arrhenius-Gleichung.

Die Geraden s1,...,sn interpolieren für jeweils einen Aushärtungsgrad die Reaktionsraten und damit die Reaktionsparameter wie beispielsweise die Aktivierungsenergie für die zwischen den Kurven r1,...,r6 liegenden Bereiche. Es hat sich gezeigt, dass sich so für Heizraten bzw. Temperaturänderungen, die nicht vermessen wurden, eine sehr hohe Genauigkeit beim Ermitteln des Aushärtungsverlaufs erzielen lässt.

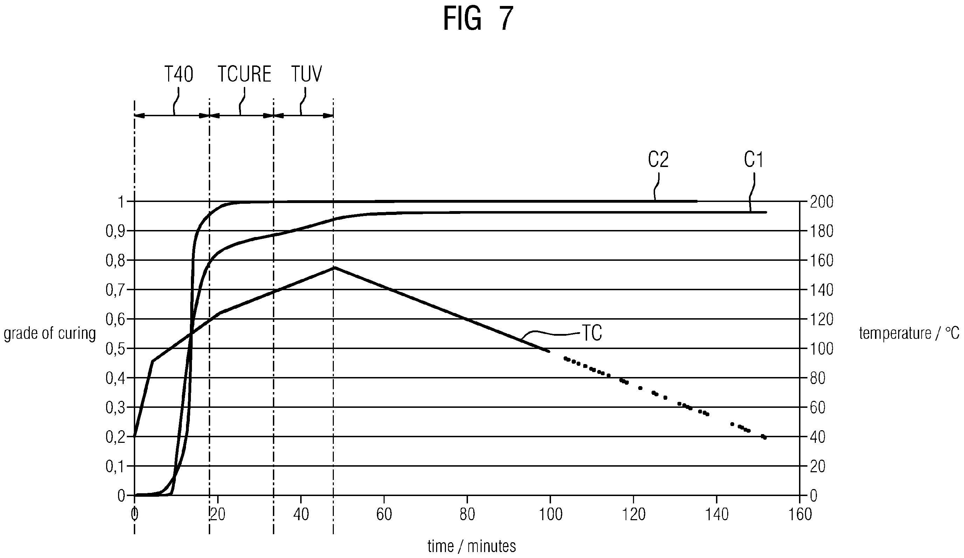

FIG 7 zeigt ein mittels je eines Reaktionsmodells für zwei voneinander verschiedene Isolationsmaterialen ermittelter Aushärtungsverlauf bei gleichem Temperaturverlauf TC. Im vorliegenden Fall wurde ein erstes, ursprüngliches Isolationsmaterial (ein Harz) mit einem ersten Aushärtungsverlauf C1 gehärtet. Es ist zu sehen, dass trotz langer Dauer und hoher Temperatur keine vollständige Härtung eintritt. Ein anderes zweites Isolationsmaterial kann bei gleichem Temperaturverlauf TC einen zweiten Aushärtungsverlauf C2 durchlaufen und ist bereits ca. zur Hälfte des Aushärtungsprozesses im Bereich TCURE (z.B. im Ofen) vollständig ausgehärtet. Dementsprechend kann das zweite Isolationsmaterial deutlich schneller und Energiesparsamer ausgehärtet werden. Eine Optimierung des Temperaturverlaufs - z.B. ein Verkürzen oder mit niedrigerer Maximaltemperatur wäre so vorteilhaft möglich.

Zusammenfassend betrifft die Erfindung ein Verfahren zum Ermitteln eines Aushärtungsverlaufs (C1,C2) beim Aufbringen einer elektrischen Isolationsschicht aus einem Isolationsmaterial (40) im flüssigen Zustand auf ein elektrisches Produkt, insbesondere auf ein elektrisches Wicklungssystem (25). Um das Aushärten des Isolationsmaterials zu verbessern werden die Schritte vorgeschlagen:
- Bereitstellen eines Temperaturverlaufs (TC), den das elektrische Produkt beim Aufbringen und Aushärten der Isolationsschicht durchläuft,
- Bereitstellen eines Reaktionsmodells des Isolationsmaterials, das den Aushärtungsverlauf des Isolationsmaterials auf Basis eines Temperaturverlaufs als Eingangsgröße ausgibt und auf Basis von gemessenen Reaktionsenthalpien (h1,...,h6) des Isolationsmaterials (40) bei zumindest zwei, vorzugweise zumindest vier, verschiedene Heizraten modelliert ist und
- Ermitteln des Aushärtungsverlaufs (C1,C2) durch das Reaktionsmodel mit dem Temperaturverlauf (TC). Weiterhin betrifft die Erfindung ein Verfahren zum Aufbringen des Isolationsmaterials (40) auf ein elektrisches Produkt, vorzugweise auf ein elektrisches Wicklungssystem (25).

### Bezugszeichen

- 25: elektrisches Wicklungssystem
- 30: Träger
- 40: Isolationsmaterial im flüssigen Zustand

- S30: Vorheizen
- TPRE: Temperaturverlauf des Vorheizens

- S40: Aufbringen des Isolationsmaterials
- T40: Temperaturverlauf des elektrischen Produkts beim Aufbringen des Isolationsmaterials
- S50: Aushärten
- TCURE: Temperaturverlauf des Aushärtens

- S60: Aushärten unter UV
- UV: UV-Aushärtevorrichtung
- TUV: Temperaturverlauf beim UV Aushärten

- TC: Temperaturverlauf beim Aufbringen und Aushärten
- T0: erste Temperatur
T1

- DSC1,...,DSCn: DSC Signal
- h1,...,hn: spezifische Enthalpie in J/g
- r1,...,r6: Reaktionsrate
- p1,...,p6: Aushärtungsgrad
- C1, C2: Aushärtungsverlauf

## Patentansprüche

1. Verfahren zum Ermitteln eines Aushärtungsverlaufs (C1,C2) beim Aufbringen einer elektrischen Isolationsschicht aus einem Isolationsmaterial (40) im flüssigen Zustand auf ein elektrisches Produkt, insbesondere auf ein elektrisches Wicklungssystem (25), umfassend die Schritte:
- Bereitstellen eines Temperaturverlaufs (TC), den das elektrische Produkt beim Aufbringen und Aushärten der Isolationsschicht durchläuft,
- Bereitstellen eines Reaktionsmodells des Isolationsmaterials, das den Aushärtungsverlauf des Isolationsmaterials auf Basis eines Temperaturverlaufs als Eingangsgröße ausgibt und auf Basis von gemessenen Reaktionsenthalpien (h1,...,h6) des Isolationsmaterials (40) bei zumindest zwei, vorzugweise zumindest vier, verschiedene Heizraten modelliert ist und
- Ermitteln des Aushärtungsverlaufs (C1,C2) durch das Reaktionsmodel mit dem Temperaturverlauf (TC).

2. Verfahren nach Anspruch 1, wobei die gemessenen Reaktionsenthalpien mittels dynamischer Differenzkalorimetrie des Isolationsmaterial gemessen werden.

3. Verfahren nach Anspruch 1 oder 2, wobei die Heizraten im Bereich von 0,1 K/min bis 10 K/min liegen, insbesondere im Bereich von 0,25 K/min bis 8 K/min.

4. Verfahren nach einem der vorhergehenden Ansprüche, wobei das Reaktionsmodel auf Basis von gemessenen Reaktionsenthalpien bei zumindest vier verschiedenen Heizraten modelliert ist.

5. Verfahren nach einem der vorhergehenden Ansprüche, wobei zum Modellieren des Reaktionsmodells Reaktionsratenverläufe der Aushärtung auf Basis von Reaktionsenthalpien des Isolationsmaterials bestimmt werden und durch Integration der Reaktionsratenverläufe Aushärtungsverläufe bestimmt werden.

6. Verfahren nach einem der vorhergehenden Ansprüche, wobei das Reaktionsmodell auf Basis der Arrhenius-Gleichung modelliert ist.

7. Verfahren nach einem der vorhergehenden Ansprüche, wobei der Temperaturverlauf (TC) ein gemessener Temperaturverlauf eines elektrischen Produkts ist, insbesondere ein mit einem Thermoelement in einem elektrischen Wicklungssystem gemessener Temperaturverlauf.

8. Verfahren nach einem der vorhergehenden Ansprüche, wobei der Temperaturverlauf (TC) ein Soll-Temperaturverlauf eines elektrischen Produkts ist.

9. Verfahren nach einem der vorhergehenden Ansprüche, wobei das Ermitteln des Aushärtungsverlaufs durch das Reaktionsmodell ein Ermitteln eines Gelpunkts umfasst.

10. Verfahren nach einem der vorhergehenden Ansprüche, wobei das Isolationsmaterial ein Harz ist, vorzugsweise ein flüssiges Reaktivharz, insbesondere Epoxidharz, ungesättigtes Polyester oder Polyesterimid.

11. Verfahren zum Aufbringen einer elektrischen Isolationsschicht aus einem Isolationsmaterial (40) im flüssigen Zustand auf ein elektrisches Produkt, insbesondere auf ein elektrisches Wicklungssystem (25), umfassend die Schritte:
- Bereitstellen des elektrischen Produkts,
- Bereitstellen des Isolationsmaterials (40) im flüssigen Zustand,
- Aufbringen des Isolationsmaterials (40) auf das Produkt,
- Aushärten des Isolationsmaterials (40),
- Bereitstellen eines Temperaturverlaufs (TC), den das elektrische Produkt beim Aufbringen und Aushärten der Isolationsschicht durchläuft und
- Beenden des Aushärtens wenn ein mit einem Verfahren nach einem der vorhergehenden Ansprüche ermittelter Aushärtungsverlauf einen Schwellwert überschreitet.

12. Verfahren nach Anspruch 11, wobei das Aufbringen ein Eintauchen des elektronischen Produkts in ein Bad des Isolationsmaterials (40) im flüssigen Zustand ist.

13. Verfahren nach Anspruch 11, wobei das Aufbringen ein Beträufeln des elektronischen Produkts mit dem Isolationsmaterial (40) im flüssigen Zustand ist.
